# EUROPÄISCHE PATENTSCHRIFT

(11) **EP 1 290 322 B1**
(45) Veröffentlichungstag und Bekanntmachung des Hinweises auf die Patenterteilung: **28.06.2006**
(21) Anmeldenummer: 01953101.1
(22) Anmeldetag: 19.05.2001
(51) Int. Cl.: F02B 23/10, F02M 61/18, F02B 17/00

(54) **BRENNSTOFFEINSPRITZSYSTEM**
FUEL INJECTION SYSTEM
SYSTEME D'INJECTION DE CARBURANT

(30) Priorität: 26.05.2000 DE 10026323
(43) Veröffentlichungstag der Anmeldung: 12.03.2003
(73) Patentinhaber: ROBERT BOSCH GMBH, 70442 Stuttgart (DE)
(72) Erfinder: SEBASTIAN, Thomas, 29418 Charleston, SC (DE); WUERFEL, Gernot, 71665 Vaihingen/Enz (DE)
(86) Internationale Anmeldenummer: PCT/DE2001/001914
(87) Internationale Veröffentlichungsnummer: WO 2001/090543

(56) Entgegenhaltungen:
- US-A- 3 572 298
- US-A- 4 958 604
- US-A- 5 170 758
- PATENT ABSTRACTS OF JAPAN vol. 011, no. 364 (M-646), 27. November 1987 (1987-11-27) -& JP 62 139924 A (ISUZU MOTORS LTD), 23. Juni 1987 (1987-06-23)

## Beschreibung

### Stand der Technik

Die Erfindung geht aus von einem Brennstoffeinspritzsystem nach der Gattung des Hauptanspruchs.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Zu diesem Zweck werden Brennstoffeinspritzventile mit Düsen eingesetzt, die nach innen oder nach außen öffnen und einen Kegelstrahl erzeugen.

Beispielsweise ist aus der DE 198 04 463 A1 ein Brennstoffeinspritzsystem für gemischverdichtende, fremdgezündete Brennkraftmaschinen bekannt, welches mit wenigstens einem Brennstoffeinspritzventil, das Brennstoff in einen von einer Kolben-/Zylinder-Anordnung gebildeten Brennraum einspritzt und mit einer in den Brennraum ragenden Zündkerze versehen ist. Der Düsenkörper des Brennstoffeinspritzventils ist dabei mit wenigstens einer Reihe über den Umfang des Düsenkörpers verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl in Richtung auf die Zündkerze gerichtet ist. Weitere Strahlen sorgen dafür, daß eine wenigstens annähernd geschlossene bzw. zusammenhängende Gemischwolke gebildet wird.

Aus der DE 196 42 653 C1 ist ein Verfahren zur Bildung eines zündfähigen Brennstoff-Luftgemisches bekannt. In den Zylindern von direkt einspritzenden Brennkraftmaschinen ist ein zündfähiges Brennstoff-Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladebetrieb, eine verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Auch aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtung umfaßt dabei ein Brennstoffeinspritzventil, das in der Zylinderwand in einigem Abstand vom Zylinderkopf und gegenüber der Auslaßöffnung angeordnet ist und eine Ausgangsöffnung aufweist, wobei die Strahlachse des Brennstoffeinspritzventils- auf den Bereich um die im Zylinderkopf angeordnete Zündkerze gerichtet ist. Das Brennstoffeinspritzventil weist dabei eine magnetbetätigte Ventilnadel mit schraubenförmigen Drallnuten zum Erzeugen einer Drallströmung des Einspritzstrahls auf. Die Gesamtquerschnittsfläche der Drallnuten ist um mindestens die Hälfte kleiner als die Querschnittsfläche der Ausgangsöffnung, wobei das Brennstoffeinspritzventil oberhalb einer Spülöffnung angeordnet ist und mit seiner Strahlachse auf den in der Zylinderkopfmitte angeordneten Zündpunkt zeigt.

Mit den aus den obengenannten Druckschriften bekannten Brennstoffeinspritzsystemen werden luft- bzw. wandgeführte Brennverfahren realisiert. Das luftgeführte Brennverfahren ist sehr stark von der Bewegung der einströmenden Luft abhängig, die die Aufgabe hat, ein zündfähiges Brennstoff-Luftgemisch über den gesamten Kennfeldbereich des Schichtladebetriebs exakt in den Elektrodenbereich der Zündkerze zu transportieren. Beim wandgeführten Brennverfahren wird der Brennstoff durch Unterstützung durch mehr oder weniger zerklüftete Brennraumgeometrien unter gleichzeitiger Gemischbildung zur Zündkerze getragen.

Der Gemischtransport zur Zündkerze gelingt bei wand- und luftgeführten Brennverfahren im Leerlauf- und unteren Teillastbetrieb nur sehr unvollkommen, im mittleren Teillastbetrieb zum Teil nur mit unvertretbar geringen Serienstreuungen der verwendeten Hochdruckeinspritzventile bzw. der Strömungsführung durch das Saugrohr. Die mangelhafte Reproduzierbarkeit zeigt sich vor allem an überhöhten Emissionen von uriverbrannten Kohlenwasserstoffen, verursacht durch einzelne Verbrennungsaussetzer.

Andererseits ist insbesondere das strahlgeführte Brennverfahren erst ab einem bestimmten Zylinderhubvolumen, welches bei ca. 500 cm³ liegt, anwendbar. Da beim momentanen Stand der Technik eine bestimmte Größe für den Lochdurchmesser der Einspritzlöcher aus technischen Gründen nicht unterschritten werden kann, führen die oben beschriebenen Anordnungen bei kleinen Zylinderhubvolumina zu einem zu fetten Gemisch. Daraus resultieren schlechtere Emissionswerte sowie ein höherer Brennstoffverbrauch. Die untere Grenze für den Lochdurchmesser liegt derzeit bei ca. 0,12 mm. Die Einspritzlöcher werden hierbei im Erodierverfahren eingebracht. Eine Verringerung des eingespritzten Brennstoffvolumens ist demnach nur über eine Reduzierung der Anzahl der Einspritzlöcher zu erreichen, wodurch jedoch die Brennstrahlgeometrie u. U. für die Entflammbarkeit des Brennstoff-/Luftgemisches ungünstiger wird. Daher wird in diesen Fällen der Brennstoffstrahl auf die Zündkerze gerichtet.

Aus der US 5,170,758 A ist bereits ein Brennstoffeinspritzsystem für Brennkraftmaschinen mit mindestens einem Brennstoffeinspritzventil bekannt, das Brennstoff in einen Brennraum einspritzt, der von einer Zylinderwandung begrenzt ist, in der ein Kolben geführt ist. Das Brennstoffeinspritzsystem umfasst des weiteren eine in den Brennraum ragende Zündkerze, wobei das Brennstoffeinspritzventil in dem Brennraum mehrere Einspritzstrahlen erzeugt und dabei mindestens vier Einspritzstrahlen in den Brennraum eingespritzt werden, wobei tangential zur Zündkerze eingespritzte innere Einspritzstrahlen einen vorgegebenen ersten Winkel einschließen, während äußere Einspritzstrahlen mit den inneren Einspritzstrahlen jeweils einen vorgegebenen zweiten Winkel einschließen. Die Einspritzstrahlen sind dabei derart ausgerichtet, dass in einem von der Zündkerze abgelegenen Bereich zumindest eine Lücke der Einspritzstrahlen vorgesehen ist. Die Größe des ersten Winkels zwischen den beiden inneren Einspritzstrahlen beträgt etwa 50° bis 60°. Die äußeren Einspritzstrahlen schließen mit den jeweils benachbarten inneren Einspritzstrahlen einen vorgegebenen zweiten Winkel von etwa je 45° bis 50° ein. Die Winkel zwischen jeweils zwei benachbarten Einspritzstrahlen sind stets größer als 40°, so dass diese sich möglichst ohne gegenseitige Berührung in unterschiedliche Richtungen des Brennraums, insbesondere in der in dem Kolben vorgesehenen Kolbenmulde ausbreiten können. Insofern sind die Einspritzlöcher an dem Brennstoffeinspritzventil in der Weise angeordnet, dass bei dieser bekannten Ausführung separierte Einspritzstrahlen in gewünschte Richtungen mit einem relativ großen Winkelabstand abgespritzt werden.

### Vorteile der Erfindung

Das erfindungsgemäße Brennstoffeinspritzsystem mit den kennzeichnenden Merkmalen des Hauptanspruchs hat demgegenüber den Vorteil, daß durch die Aussparung eines von der Zündkerze entfernten Bereiches bei der Einspritzung die eingespritzte Brennstoffmenge durch eine Verringerung der Anzahl von Einspritzlöchern reduziert werden kann, ohne den Durchmesser der Einspritzlöcher verkleinern zu müssen. Damit kann den Anforderungen an einen geringeren Brennstoffbedarf von Brennkraftmaschinen mit kleinem Hub Rechnung getragen werden, ohne daß aufwendige Maßnahmen zum Einbringen kleinerer Einspritzlöcher in die Brennstoffeinspritzventile nötig sind.

Insbesondere werden die Thermoschockbelastung und die Verrußung der Zündkerze durch das auf die Zündkerzenposition bezogene tangentiale Einspritzen von Brennstoff vermindert, die Einspritzstrahlen sind also nicht direkt auf die Zündkerze gerichtet.

Von Vorteil ist außerdem, daß die Strahllücke an der Zündkerze die Möglichkeit eröffnet, in allen Kennfeld- und Betriebsbereichen der Brennkraftmaschine das Brennstoff-/Luftgemisch während der Einspritzung zu zünden bzw. während der Zündung Brennstoff einzuspritzen.

Durch eine gezielte Anordnung der Einspritzlöcher und damit der Einspritzstrahlen im Brennraum kann vorteilhafterweise auch die Einbaulage der Ein- und Auslaßventile sowie der Zündkerze im Zylinderkopf berücksichtigt werden und trotzdem die Geometrie der Brennraummulde im Kolben optimal genutzt werden.

Die für das Brennstoffeinspritzsystem geeigneten Brennstoffeinspritzventile können vorteilhafterweise ohne zusätzlichen Fertigungsaufwand kostengünstig hergestellt werden. Zudem nimmt die Empfindlichkeit der Einbautiefe der Zündkerze aufgrund der möglichen größeren Durchmesser der Einspritzlöcher ab.

Durch die in den Unteransprüchen aufgeführten Maßnahmen sind vorteilhafte Weiterbildungen des im Hauptanspruch angegebenen Brennstoffeinspritzsystems möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Brennstoffeinspritzsystem gemäß dem Stand der Technik für ein strahlgeführtes Brennverfahren,
- Fig. 2: einen schematischen Schnitt durch ein Beispiel des Brennstoffeinspritzsystems entlang der Linie II-II in Fig. 1,
- Fig. 3: einen schematischen Schnitt durch ein erstes Ausführungsbeispiel des erfindungsgemäßen Brennstoffeinspritzsystems entlang der Linie II-II in Fig. 1,
- Fig. 4: einen schematischen Schnitt durch ein zweites Ausführungsbeispiel des erfindungsgemäßen Brennstoffeinspritzsystems entlang der Linie II-II in Fig. 1,
- Fig. 5: einen schematischen Schnitt durch ein drittes Ausführungsbeispiel des erfindungsgemäßen Brennstoffeinspritzsystems entlang der Linie II-II in Fig. 1 und
- Fig. 6: einen schematischen Schnitt durch ein viertes Ausführungsbeispiel des erfindungsgemäßen Brennstoffeinspritzsystems entlang der Linie II-II in Fig. 1.

### Beschreibung der Ausführungsbeispiele

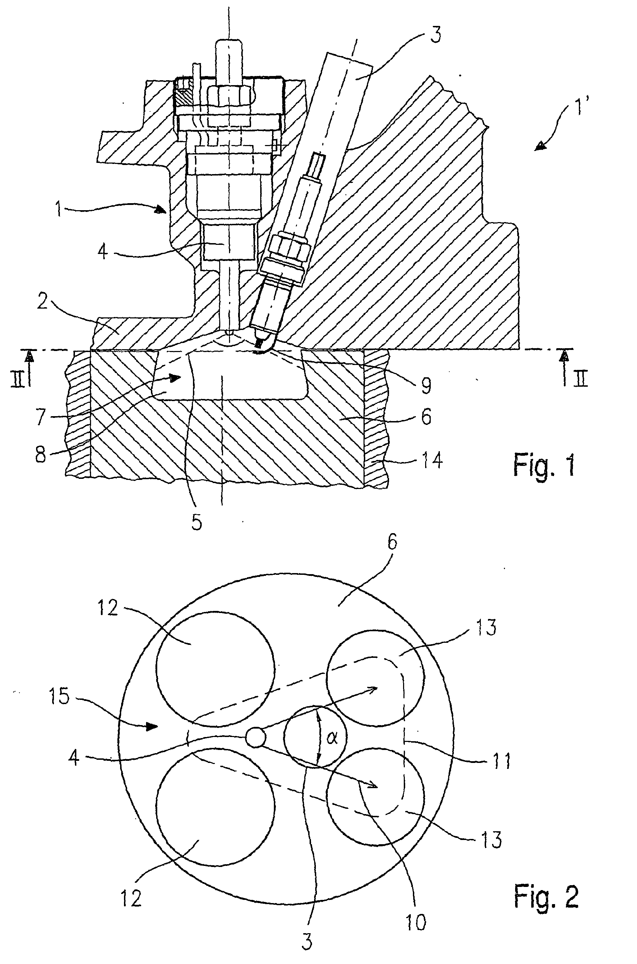

Fig. 1 zeigt in einer ausschnittsweisen, schematisierten Schnittdarstellung einen Längsschnitt durch einen Zylinder einer ein- oder mehrzylindrigen, gemischverdichtenden Brennkraftmaschine 1'. Die Brennkraftmaschine 1' weist einen Zylinderkopf 2 auf, in welchem eine Zündkerze 3 und ein Brennstoffeinspritzventil 4 in entsprechend gestalteten Ausnehmungen angeordnet sind. Da der Aufbau sowohl der Zündkerze 3 als auch des Brennstoffeinspritzventils 4 bekannt sind, kann auf eine weitergehende Beschreibung dieser Bauteile verzichtet werden. Im folgenden wird der in Fig. 1 dargestellte Ausschnitt der Brennkraftmaschine 1' mit Brennstoffeinspritzsystem 1 bezeichnet.

Das Brennstoffeinspritzventil 4 spritzt Brennstoff in einem teilweise geschlossenen Einspritzkegel 5 in einen durch den Zylinderkopf 2, einen Kolben 6 sowie eine nur schematisch dargestellte Zylinderwandung 14 abgegrenzten Brennraum 7 ein. Der Brennraum 7 wird dabei teilweise durch eine im Kolben 6 ausgebildete Brennraummulde 8 gebildet.

Das Brennstoffeinspritzventil 4 und die Zündkerze 3 sind so zueinander angeordnet, daß die Zündkerze 3 seitlich versetzt vom Brennstoffeinspritzventil 4 in den Brennraum 7 hineinragt, wobei sich Zündkerzenelektroden 9 im Bereich des Einspritzkegels 5 befinden.

Die Form des Einspritzkegels 5 ist dabei von der Gestaltung des abspritzseitigen Endes des Brennstoffeinspritzventils 4 abhängig. Das Brennstoffeinspritzventil 4 ist zweckmäßigerweise als nach innen öffnendes (I-Ventil) Brennstoffeinspritzventil 4 ausgeführt. Die Einspritzung des Brennstoffs in den Brennraum 7 erfolgt durch die Erregung eines magnetischen oder piezoelektrischen Aktors, durch welchen eine nicht weiter dargestellte Ventilnadel bzw. ein mit dieser verbundener Ventilschließkörper von einem mit Einspritzlöchern versehenen Ventilkörper abhebt. Dadurch wird Brennstoff durch das Brennstoffeinspritzventil 4 und die Einspritzlöcher im Ventilkörper in den Brennraum 7 eingespritzt.

Die Fig. 2 bis 6 zeigen in einer ausschnittsweisen Schnittdarstellung jeweils einen Schnitt durch den zylinderkopf 2 der in Fig. 1 dargestellten Brennkraftmaschine 1' mit dem Brennstoffeinspritzsystem 1. Der Schnitt verläuft dabei entlang der mit II-II gekennzeichneten Linie in Fig. 1. Dargestellt ist dabei jeweils eine Ansicht des oberen Endes des Kolbens 6, die darin ausgebildete Brennraummulde 8, die durch den gestrichelt dargestellten Brennraummuldenrand 11 begrenzt ist, mit jeweils verschiedenen Ausführungsbeispielen für die Anordnung des Brennstoffeinspritzventils 4, der Zündkerze 3, der Einspritzstrahlen 10 sowie einer variablen Anzahl von Einlaßventilen 12 und Auslaßventilen 13.

Die Einspritzstrahlen 10 sind dabei idealisiert strichförmig dargestellt. In der Realität weisen die Einspritzstrahlen 10 eine gewisse räumliche Ausdehnung auf, so daß sich benachbarte Einspritzstrahlen 10, die unter einem Winkel β nebeneinander liegen, gegenseitig berühren und in diesen Bereichen jeweils eine kegelsegmentförmige Abspritzgeometrie bilden. Dieses teilweise kegelförmige Strahlbild ist in den Lücken der Zündkerze 3 bzw. an den Zündkerzen 3a, 3b (also in den Winkelbereichen α) sowie in den erfindungsgemäßen Lücken 15 unterbrochen.

Fig. 2 zeigt dabei ein Beispiel für Hubraumvolumina unter 500 cm³, wobei das Brennstoffeinspritzventil 4 zwei Einspritzstrahlen 10 tangential zur Zündkerze 3 in den Brennraum 7 einspritzt. Der Öffnungswinkel α beträgt dabei vorzugsweise etwa 45°.

Der Brennraummuldenrand 11 ist entsprechend der Anordnung der zwei Einspritzstrahlen 10 gestaltet, um die Verbrennung zu unterstützen. Die Winkelausnehmung bzw. Lücke 15 der Einspritzstrahlen 10 hinter der Zündkerze 3 beträgt demnach ca. 315°. In diesem Bereich sind auch zwei Einlaßventile 12 angeordnet. Zwei Auslaßventile 13 können in Einspritzrichtung angeordnet sein. Die Anordnung der Ein-und Auslaßventile 12, 13 kann auch umgekehrt oder beliebig gestaltet werden.

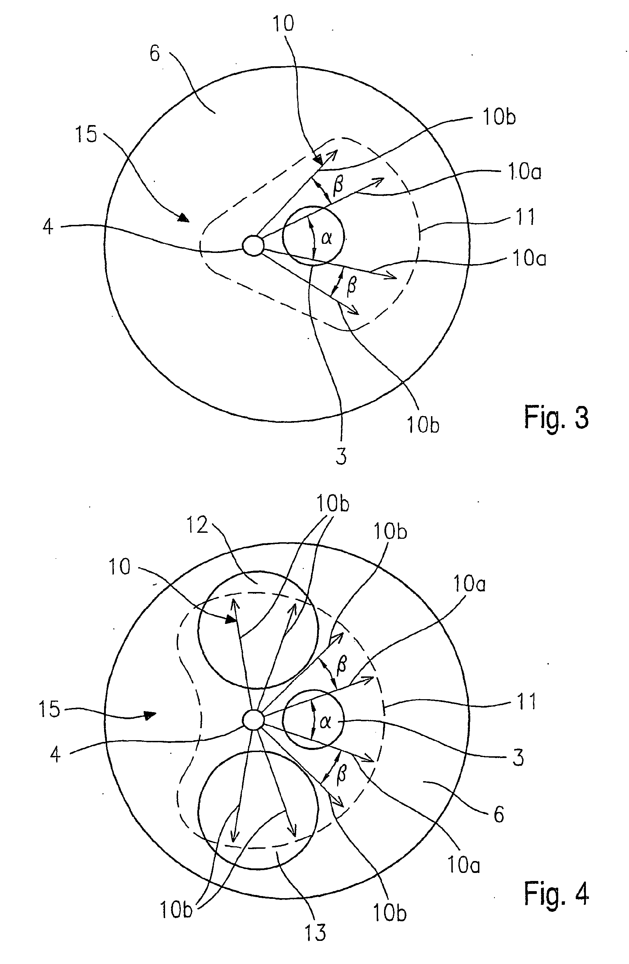

In Fig. 3 ist ein erstes Ausführungsbeispiel des erfindungsgemäßen Brennstoffeinspritzsystems 1 dargestellt. Hierbei werden insgesamt vier Einspritzstrahlen 10 durch das Brennstoffeinspritzventil 4 in den Brennraum 7 eingespritzt. Dabei liegen die inneren Einspritzstrahlen 10a annähernd tangential zur Zündkerze 3, die äußeren Einspritzstrahlen 10b sind in einem Winkelabstand β von jeweils 20°-30° zu den inneren Einspritzstrahlen 10a angeordnet. Der Brennraummuldenrand 11 ist wiederum der Anordnung der Einspritzstrahlen 10 angepaßt. In diesem Ausführungsbeispiel sind die Ein- und Auslaßventile 12 und 13 in anderen Bereichen des Zylinderkopfs 2 angeordnet. Die Anordnung von vier Einspritzstrahlen 10 eignet sich für etwas größere Hubraumvolumina, für die etwas mehr Brennstoff als im ersten Ausführungsbeispiel benötigt wird. Der von den Einspritzstrahlen 10 nicht bestrichene Winkelausschnitt im Bereich der Lücke 15 entgegengesetzt zur Zündkerze 3 beträgt in diesem Ausführungsbeispiel zwischen 250° und 280°.

In Fig. 4 ist ein zweites Ausführungsbeispiel für eine Brennkraftmaschine 1' mit weiter vergrößertem Hubraum dargestellt, wobei die Anzahl der Einspritzstrahlen 10 nun acht beträgt. Die inneren Einspritzstrahlen 10a sind wie in den vorigen Ausführungsbeispielen annähernd tangential zur Zündkerze 3 angeordnet, der dazwischenliegende Winkel α beträgt etwa 45°. Die äußeren Einspritzstrahlen 10b sind in Winkelabständen β von jeweils 20°-30° zu den inneren Einspritzstrahlen 10a angeordnet. Der nicht von den Einspritzstrahlen 10 bestrichene Winkel im Bereich der Lücke 15 entgegengesetzt zur Zündkerze 3 beträgt im vorliegenden Ausführungsbeispiel zwischen 130° und 200°. Der Brennraummuldenrand 11 ist wiederum dem Strahlbild angepaßt. Symmetrisch zu einer Linie, auf welcher das Brennstoffeinspritzventil 4 und die Zündkerze 3 angeordnet sind, können ein Einlaßventil 12 und Auslaßventil 13 zugeordnet sein.

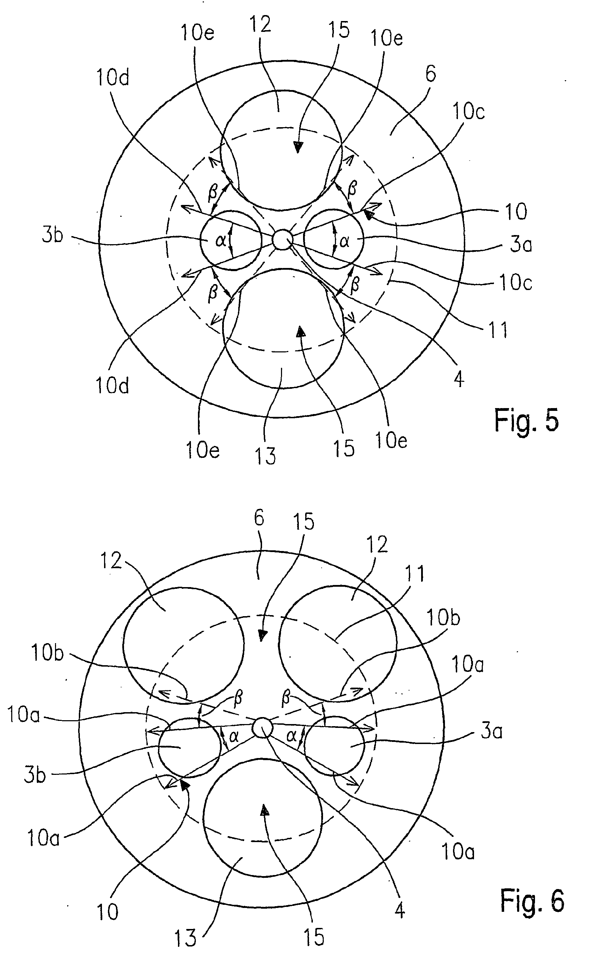

In den Ausführungsbeispielen in Fig. 5 und Fig. 6 sind bevorzugte Ausgestaltungsvarianten für Brennstoffeinspritzsysteme 1 mit mindestens zwei Zündkerzen 3a, 3b dargestellt.

In Fig. 5. ist in gleicher Darstellung wie in Fig. 2 bis 4 ein drittes Ausführungsbeispiel eines Brennstoffeinspritzsystems 1 dargestellt, welches über zwei Zündkerzen 3a und 3b verfügt, welche symmetrisch zum Brennstoffeinspritzventil 4 angeordnet sind. Ein Einlaßventil 12 und ein Auslaßventil 13 sind so angeordnet, daß die Zündkerzen 3a und 3b sowie das Einlaßventil 12 und das Auslaßventil 13 eine kleeblattförmige Anordnung bilden. Für kleinvolumige Brennkraftmaschinen l' kann eine Anordnung mit vier Einspritzstrahlen 10 realisiert werden, welche jeweils unter einem Winkel α von etwa 45° zueinander annähernd tangential zu den Zündkerzen 3a und 3b in den Brennraum 7 eingespritzt werden. Für etwas größere Hubraumvolumina bietet sich das Einspritzen von insgesamt acht Einspritzstrahlen 10 an, welche vorzugsweise die Zwischenräume zwischen dem Einlaß- bzw. Auslaßventil 12, 13 und den zwei Zündkerzen 3a, 3b abdecken. Der Brennraummuldenrand 11 ist in diesem Ausführungsbeispiel kreisförmig gestaltet. Zwei Einspritzstrahlen 10c werden annähernd tangential zur ersten Zündkerze 3a, zwei weitere Einspritzstrahlen 10d annähernd tangential zur zweiten Zündkerze 3b als innere Einspritzstrahlen 10c, 10d eingespritzt. In einem Winkelabstand β zu den inneren Einspritzstrahlen 10c, 10d werden vier äußere Einspritzstrahlen 10e eingespritzt.

In Fig. 6 ist ein viertes Ausführungsbeispiel für das erfindungsgemäße Brennstoffeinspritzsystem 1 dargestellt, wobei hierbei gegenüber einem Auslaßventil 13 zwei Einlaßventile 12 angeordnet sind. Der Brennraummuldenrand 11 ist wiederum kreisförmig ausgebildet. Die Zündkerzen 3a und 3b werden etwa tangential von Einspritzstrahlen 10 eingefaßt, deren Öffnungswinkel α 45° beträgt. Für etwas größere Hubräume können auch sechs Einspritzstrahlen 10 in den Brennraum 7 eingespritzt werden, wobei die Winkelentfernung β zwischen den tangential zu den Zündkerzen 3a, 3b verlaufenden inneren Einspritzstrahlen 10a und den gestrichelt dargestellten äußeren Einspritzstrahlen 10b zwischen 20° und 30° betragen kann.

In allen Ausführungsbeispielen der Brennstoffeinspritzsysteme 1 sind die Einspritzstrahlen 10 so ausgerichtet, daß eine oder mehrere Lücken 15 ausgebildet sind, die einen Winkelbereich von wenigstens 150° und maximal 315° aufspannen.

Die Erfindung ist nicht auf die dargestellten Ausführungsbeispiele beschränkt und z. B. auch für Brennstoffeinspritzsysteme 1 mit mehr oder weniger Einspritzlöchern, Ein- und Auslaßventilen und insbesondere mehreren Zündkerzen und variablen Hubraumvolumina auch unter 500 cm³ anwendbar. Insbesondere können Brennstoffeinspritzventile realisiert werden, deren Kegelöffnungswinkel der Einspritzstrahlen beliebige Werte zwischen 30° und 150° annehmen.

## Patentansprüche

1. Brennstoffeinspritzsystem (1) für Brennkraftmaschinen mit mindestens einem Brennstoffeinspritzventil (4), das Brennstoff in einen Brennraum (7) einspritzt, der von einer Zylinderwandung (14) begrenzt ist, in der ein Kolben (6) geführt ist, und mit einer in den Brennraum (7) ragenden Zündkerze (3), wobei das Brennstoffeinspritzventil (4) in dem Brennraum mehrere Einspritzstrahlen (10) erzeugt und dabei mindestens vier Einspritzstrahlen (10) in den Brennraum (7) eingespritzt werden, wobei tangential zur Zündkerze (3) eingespritzte innere Einspritzstrahlen (10a) einen vorgegebenen ersten Winkel (α) einschließen, während äußere Einspritzstrahlen (10b) mit den inneren Einspritzstrahlen (10a) einen vorgegebenen zweiten Winkel (β) einschließen, und die Einspritzstrahlen (10) derart ausgerichtet sind, dass in einem von der Zündkerze (3) abgelegenen Bereich zumindest eine Lücke (15) der Einspritzstrahlen (10) vorgesehen ist,
**dadurch gekennzeichnet,**
**dass** jeder Einspritzstrahl (10) eine solche räumliche Ausdehnung hat, dass sich benachbarte Einspritzstrahlen (10a, 10b), die unter dem Winkel (β) nebeneinander liegen, gegenseitig berühren und in diesen Bereichen eine kegelsegmentförmige Abspritzgeometrie bilden.

2. Brennstoffeinspritzsystem nach Anspruch 1,
**dadurch gekennzeichnet,**
**dass** der erste vorgegebene Öffnungswinkel (α) etwa 45° beträgt.

3. Brennstoffeinspritzsystem nach Anspruch 2,
**dadurch gekennzeichnet,**
**dass** eine in einem Ende des Kolbens (6) angeordnete Brennraummulde (8) so ausgestaltet ist, dass die Einspritzstrahlen (10) sich im Bereich der Brennraummulde (8) erstrecken.

4. Brennstoffeinspritzsystem nach einem der Ansprüche 1 bis 3,
**dadurch gekennzeichnet,**
**dass** der zweite vorgegebene Winkel (β) zwischen 20° und 30° beträgt.

5. Brennstoffeinspritzsystem nach einem der Ansprüche 1 bis 4,
**dadurch gekennzeichnet,**
**dass** zwei erste Einspritzstrahlen (10c) tangential zu einer ersten Zündkerze (3a) eingespritzt werden und zwei zweite Einspritzstrahlen (10d) tangential zu einer zweiten Zündkerze (3b) eingespritzt werden und die ersten Einspritzstrahlen (10c) und die zweiten Einspritzstrahlen (10d) jeweils einen vorgegebenen ersten Winkel (α) einschließen.

6. Brennstoffeinspritzsystem nach Anspruch 5,
**dadurch gekennzeichnet,**
**dass** mindestens acht Einspritzstrahlen (10) so in den Brennraum (7) eingespritzt werden, dass zwischen die erste Zündkerze (3a) und die zweite Zündkerze (3b) einschließenden inneren Einspritzstrahlen (10c, 10d) und weiteren äußeren Einspritzstrahlen (10e) jeweils ein konstanter Winkel (β) eingeschlossen ist.

## Claims

1. Fuel injection system (1) for internal combustion engines, having at least one fuel injection valve (4) which injects fuel into a combustion chamber (7) that is delimited by a cylinder wall (14) in which a piston (6) is guided, and having a spark plug (3) projecting into the combustion chamber (7), the fuel injection valve (4) generating a plurality of injection jets (10) in the combustion chamber, and in this case at least four injection jets (10) being injected into the combustion chamber (7), inner injection jets (10a), which are injected tangentially with respect to the spark plug (3), including a predetermined first angle (α), while outer injection jets (10b) include a predetermined second angle (β) with the inner injection jets (10a), and the injection jets (10) being directed in such a manner that at least one gap (15) in the injection jets (10) is provided in a region remote from the spark plug (3), **characterized in that** each injection jet (10) has a spatial extent which is such that adjacent injection jets (10a, 10b), which are located at the angle (β) next to one another, touch one another and in these regions form a spray geometry in the form of a cone segment.

2. Fuel injection system according to Claim 1, **characterized in that** the first predetermined included angle (α) is approximately 45°.

3. Fuel injection system according to Claim 2, **characterized in that** a combustion chamber cavity (8) arranged in one end of the piston (6) is configured in such a way that the injection jets (10) extend in the region of the combustion chamber cavity (8).

4. Fuel injection system according to one of Claims 1 to 3, **characterized in that** the second predetermined angle (β) is between 20° and 30°.

5. Fuel injection system according to one of Claims 1 to 4, **characterized in that** two first injection jets (10c) are injected tangentially with respect to a first spark plug (3a), and two second injection jets (10d) are injected tangentially with respect to a second spark plug (3b), and the first injection jets (10c) and the second injection jets (10d) in each case include a predetermined first angle (α).

6. Fuel injection system according to Claim 5, **characterized in that** at least eight injection jets (10) are injected into the combustion chamber (7) in such a way that a constant angle (β) is in each case included between inner injection jets (10c, 10d), which enclose the first spark plug (3a) and the second spark plug (3b), and further outer injection jets (10e).

## Revendications

1. Système d'injection de carburant (1) pour des moteurs à combustion interne, comprenant au moins un injecteur de carburant (4) qui injecte du carburant dans une chambre de combustion (7) délimitée par une paroi de cylindre (14) qui guide un piston (6), et une bougie d'allumage (3) pénétrant dans la chambre de combustion (7) dans laquelle l'injecteur de carburant (4) produit plusieurs jets d'injection (10), et pour cela au moins quatre jets d'injection (10) dont des jets d'injection intérieurs (10a) injectés tangentiellement à la bougie d'allumage (3) délimitent un premier angle prédéterminé (α), alors que des jets d'injection extérieurs (10b) délimitent un deuxième angle prédéterminé (β) avec les jets d'injection intérieurs (10a), les jets d'injection (10) étant dirigés pour avoir dans une région écartée de la bougie d'allumage (3) au moins une lacune (15) de jets d'injection,
**caractérisé en ce que**
chaque jet d'injection (10) a une extension dans l'espace telle que des jets d'injection voisins (10a, 10b) les uns des autres selon un angle (β), se touchent mutuellement et délimitent dans ces régions une géométrie d'éjection en forme de segment de cône.

2. Système d'injection de carburant selon la revendication 1,
**caractérisé en ce que**
le premier angle d'ouverture prédéterminé (α) vaut environ 45°.

3. Système d'injection de carburant selon la revendication 2,
**caractérisé en ce qu'**
une cuvette de chambre de combustion (8) est formée dans une extrémité du piston (6) de telle façon que les jets d'injection (10) s'étendent dans la région de la cuvette de chambre de combustion (8).

4. Système d'injection de carburant selon l'une quelconque des revendications 1 à 3,
**caractérisé en ce que**
le deuxième angle prédéterminé (β) vaut entre 20° et 30°.

5. Système d'injection de carburant selon l'une quelconque des revendications 1 à 4,
**caractérisé en ce que**
deux premiers jets d'injection (10c) sont injectés tangentiellement à une première bougie d'allumage (3a) et deux deuxièmes jets d'injection (lOd) sont injectés tangentiellement à une deuxième bougie d'allumage (3b), et les premiers jets d'injection (10c) et les deuxième jets d'injection (10d) délimitant chaque fois un premier angle prédéterminé (α).

6. Système d'injection de carburant selon la revendication 5,
**caractérisé en ce qu'**
au moins huit jets d'injection (10) sont injectés dans la chambre de combustion (7) en formant un angle constant (β) chaque fois délimité entre d'une part, des jets d'injection intérieurs (10c, 10d) délimitant la première bougie d'allumage (3a) et la deuxième bougie d'allumage (3b), et, d'autre part, d'autres jets d'injection extérieurs (10e).
